# EUROPÄISCHE PATENTSCHRIFT

(11) **EP 4 268 130 B1**
(45) Veröffentlichungstag und Bekanntmachung des Hinweises auf die Patenterteilung: **29.01.2025**
(21) Anmeldenummer: 21835370.4
(22) Anmeldetag: 17.11.2021
(51) Int. Cl.: G06K 19/14, G06K 19/18, G06V 20/80, G06K 19/08, B42D 25/00, B42D 25/305

(54) **VERFAHREN ZUM EINDEUTIGEN MARKIEREN VON OBJEKTEN**
METHOD FOR UNAMBIGUOUSLY MARKING OBJECTS
PROCÉDÉ DE MARQUAGE UNIVOQUE D'OBJETS

(30) Priorität: 22.12.2020 DE 102020134568
(43) Veröffentlichungstag der Anmeldung: 01.11.2023
(73) Patentinhaber: Leuchtstoffwerk Breitungen GmbH, 98597 Breitungen (DE)
(72) Erfinder: BITZER, Thomas, 41066 Mönchengladbach (DE); DAUMANN, Benedikt, 94522 Wallersdorf (DE); UHLICH, Dominik, 36448 Bad Liebenstein (DE)
(74) Vertreter: Castell, Klaus
(86) Internationale Anmeldenummer: PCT/IB2021/060644
(87) Internationale Veröffentlichungsnummer: WO 2022/136966

(56) Entgegenhaltungen:
- US-A1- 2011 164 748

## Beschreibung

Die Erfindung betrifft ein Verfahren zum eindeutigen Markieren eines Objektes, wobei eine zufällige Verteilung von einzelnen Pigment-Domänen auf eine Oberfläche des Objektes aufgebracht wird, und wobei eine Liste von Abständen der einzelnen Pigment-Domänen untereinander gemessen und in einer Datenbank gespeichert wird und ein dazu korrespondierendes Verfahren zum Identifizieren eines Objekts.

Zum individuellen Markieren und Identifizieren eines Objektes ist es bekannt, jedes einzelne, individuelle Objekt mit einer Suspension von fluoreszierenden o der phosphoreszierenden Pigmenten zu markieren. Die Suspension ist dabei so dünn oder geringkonzentriert, dass im Aufstrich nur wenige Pigment-Partikel oder Pigment-Domänen vorkommen. Die Verteilung der Pigment-Domänen ist dabei zufällig verteilt. Das Zufallsmuster aus Pigment-Domänen kann dazu verwendet werden, eine eindeutige Identifikation des individuell markierten Objektes durchzuführen. Das Besondere bei der zufälligen Markierung mit Pigment-Domänen ist, dass sich die Zufallsmuster nicht in wirtschaftlicher Weise kopieren lassen. Es ist auch bekannt, Geldscheine oder Wertpapiere auf diese Weise zu markieren, um fälschungs- und kopiersichere Scheine zu erzeugen.

Um die Fälschungssicherheit zu erhöhen, ist es des Weiteren bekannt, auf Besonderheiten der Pigmente abzustellen, wie Relaxationszeit beim Phosphoreszieren, spektrale Zusammensetzung der Fluoreszenz. aber auch die Markierung der Marker-Pigmente selbst.

Das Markieren und Einlesen des produzierten Zufallsmusters kann mit besonderen, dafür eingereichten Aufnahmevorrichtungen durchgeführt werden. Je nach Produktionsdurchsatz für ein Objekt kann der Markierungsaufwand durch die gleichzeitig notwendige Erfassung des Zufallsmusters hohe Anforderungen an eine einzusetzende Informationstechnologie stellen.

Um die Echtheit einer Markierung feststellen zu können, gibt es Weiterentwicklungen dieser Markierungssysteme, in welchem das aufgebrachte Zufallsmuster durch einen Algorithmus einem sogenannten Hash, einer chiffrierten Zahl zugewiesen wird. Diese eindeutig aus dem Zufallsmuster ableitbare Zahl wird sodann kryptografisch mit einem ersten geheimen Schlüssel signiert und der signierte Hash wird auf das Objekt in maschinenlesbarer Weise aufgedruckt. Zur Echtheitsprüfung des Objektes genügt es, aus dem Zufallsmuster der Pigment-Domänen diese eindeutig ableitbare Zahl zu generieren und mit der signierten und auf das Objekt aufgebrachten Zahl zu vergleichen. Die Anforderungen an eine Informationstechnologie halten sich damit in überschaubaren Grenzen.

Im Zuge der zum Zeitpunkt dieser Anmeldung gelebten sogenannten Industrie 4.0, der digitalisierten Begleitung sämtlicher Produktionsprozesse, die es erlaubt, vom ursprünglichen Ausgangsprodukt bis zum Endprodukt sämtliche Veredelungsschritte eindeutig nachzuvollziehen, erfordert es, dass die Markierung einerseits sehr schnell und mit wenig Aufwand implementiert werden kann und auch, dass die spätere Identifizierung ebenso mit einem hohen Durchsatz durchgeführt werden kann.

In der deutschen Patentveröffentlichung DE 10 2014 207 323 B4 wird offenbart, ein Zufallsmuster und einen weiteren Code mit Licht unterschiedlicher Zusammensetzung sichtbar zu machen. Dazu ist ein zweistufiges Leseverfahren notwendig, welches zunächst das Zufallsmuster sichtbar macht und in einem weiteren Schritt ist der Code sichtbar zu machen.

In der Europäischen Patentschrift EP 2 296 911 B1 wird offenbart, ein Zufallsmuster und einen Code auf das Objekt aufzubringen. Das Zufallsmuster wird in einem sogenannten Hash codiert, einer eindeutig aus dem Zufallsmuster ableitbaren Zeichen- und Ziffernfolge. Der Hash wird jedoch nicht signiert.

In der Europäischen Patentanmeldung EP 2 930 699 A1 wird offenbart, ein Zufallsmuster und einen Code auf das Objekt aufzubringen. Das Zufallsmuster wird in einem sogenannten Hash codiert, einer eindeutig aus dem Zufallsmuster ableitbaren Zeichen- und Ziffernfolge. Dieser Hash wird zusätzlich verschlüsselt auf das Objekt aufgedruckt.

In der europäischen Patentschrift EP 2 296 912 B1 wird offenbart, ein Zufallsmuster und einen Code auf das Objekt aufzubringen, wobei ein elektrisch leitfähiger Lack verwendet wird. In dem elektrisch leitfähigen Lack werden weitere Echtheitsmerkmale untergebracht.

Auch in der deutschen Patentanmeldung DE 10 304 805 A1 und in dem US-Patent US 7,353,994 B2 wird offenbart, ein Zufallsmuster und einen Code auf das Objekt aufzubringen. Das Zufallsmuster wird ebenfalls in einem sogenannten Hash codiert, einer eindeutig aus dem Zufallsmuster ableitbaren Zeichen- und Ziffernfolge. Dieser Hash wird zusätzlich verschlüsselt auf das Objekt aufgedruckt.

In dem US-Patent US 7,576,842 B2 wird das Zufallsmuster noch um eine Höhendimension beim Ausdrucken angereichert, so dass der Ort der einzelnen Pigment-Domänen mit drei Koordinaten charakterisiert werden kann. Dadurch erhöht sich die Hürde zum Kopieren des Zufallsmusters.

In der US-Patentanmeldung US 2016 007 8307 A1 wird das Zufallsmuster der Pigment-Domänen noch um ein Relaxationsmuster beim Phosphoreszieren angereichert.

In der US-Patentschrift US 10,01,9627 B2 wird das Zufallsmuster der Pigment-Domänen noch um parallaxenbedingte Abbildungsunterschiede angereichert.

Nach der Lehre des deutschen Patents DE 10 2015 219 400 B4 wird ein einmal aufgebrachtes Zufallsmuster aus fluoreszierenden Pigment-Domänen erneut als Schwarz-Weißmuster auf das Objekt aufgebracht. Zum Echtheitstest wird das Zufallsmuster mit dem aufgedruckten Muster verglichen.

In der internationalen Patentanmeldung WO 2019/197 628 A1 wird ein Erkennen der Echtheit durch Vergleich eines aufgebrachten Zufalls mit einem hinterlegten Referenzbild gelehrt. Das Referenzbild ist in einer Datenbank hinterlegt.

Schließlich wird in der als US 2011-0164748 A1 veröffentlichten US-Patentanmeldung beschrieben, eine Folie mit zufällig verteilten Pigment-Partikeln herzustellen. Die Folie dient als Verpackungsmaterial für Gegenstände, deren Echtheit geprüft werden soll. Dazu wird in einem ausgewählten Bereich das zufällige Muster aufgenommen und mit einem hinterlegten Muster verglichen.

Die zuvor genannten Verfahren sind dahingehend optimiert, die Hürde der Kopierbarkeit zu erhöhen, indem dem Zufallsmuster weitere Observablen hinzugefügt werden. Andere Verfahren wiederum lösen das Problem, dass eine Echtheitsüberprüfung auch Offline, also ohne Datenverbindung zu einer autoritativen Datenbank, durchgeführt werden kann.

Aufgabe der Erfindung ist es jedoch, ein Verfahren zum individuellen Markieren und dazu ein korrespondierendes Verfahren zum individuellen Identifizieren eines individuellen Objektes zur Verfügung zu stellen, das hohe Produktionsdurchsätze zulässt. Das Markierungsverfahren und auch das Identifikationsverfahren sollen schnell durchführbar sein.

Die der Erfindung zu Grunde liegende Aufgabe wird gelöst durch ein Verfahren nach Anspruch 1. Weitere vorteilhafte Ausgestaltungen sind in den Unteransprüchen zu Anspruch 1 angegeben. Das Identifizieren wird gelöst durch ein Verfahren nach dem abhängigen Anspruch 1.

Nach dem Gedanken der Erfindung sind die folgenden Schritte vorgesehen: Nach dem bekannten, zufälligen Verteilen von Pigment-Domänen auf ein Objekt, sei es durch Aufstreichen, Aufdrucken, Abklatschen, Aufsprühen oder in sonstiger Weise erfolgt ein Aufnehmen eines Bildes der Pigment-Domänen. Dieses Aufnehmen kann mit einer gattungsgemäßen Digitalkamera geschehen. Das aufgenommene Bild wird so dann einer automatisierten Analyse unterzogen. Die automatisierte Analyse umfasst ein Identifizieren der zweidimensionalen Koordinaten einer jeden im Bild aufgenommen Pigment-Domäne. Dabei ist die Anzahl der Pigment-Domänen, die bei der Aufnahme gefunden werden, abhängig von der Konzentration der Pigmente in einem Lack und einem Toner oder in einem Aufstrich. Es hat sich als vorteilhaft herausgestellt, wenn eine untere zweistellige Zahl von Pigment-Domänen beim Aufnehmen gefunden wird. Die Identifikation lässt sich unterstützen, wenn die Pigmente fluoreszieren oder phosphoreszieren. Das Eigenleuchten lässt durch entsprechende Belichtung eine Kontrastfilterung zu, die so stark ist, dass die fluoreszierenden oder phosphoreszierenden Pigment-Domänen als einzige Lichtpunkte in dem Bild der Digitalkamera erscheinen. Durch heutige Bilderkennungsalgorithmen ist es aber auch möglich, nicht fluoreszierende Pigmente in einem Bild zu erkennen und zu identifizieren. Nach dem Identifizieren der einzelnen Pigment-Domänen folgt ein Bestimmen des zweidimensionalen Abstandes eines jeden Paares aus zwei Pigment-Domänen. Dabei ergeben sich (n²+n) / 2 Abstände, wenn genau n Pigment-Domänen vorliegen. Des Weiteren bildet je ein Tripel von Pigment-Domänen einen eindeutig bestimmbaren Winkel. Hierzu existieren m über 3 Möglichkeiten, berechnet aus m! / (3! * (m - 3)!), um je einen Winkel eines Pigment-Tripels aus m Pigment-Domänen zu bestimmen. Die Zahl der wechselseitigen Abstände wächst also mit dem Quadrat der Anzahl der identifizierten Pigment-Domänen. Die Anzahl der bestimmbaren Winkel wächst mit der mathematischen Fakultät der Anzahl der Pigment-Domänen. Weil die Zahlen recht schnell recht groß werden, sollten nicht zu viele Pigment-Domänen in einem aufgenommenen Bild vorhanden sein. Nach dem Bestimmen des zweidimensionalen Abstandes eines jeden Paares aus zwei Pigment-Domänen und / oder dem Bestimmen sämtlicher Winkel eines jeden Pigment-Domänen-Tripels, folgt ein Speichern der im Schritt zuvor bestimmten Abstände und / oder Winkel in einer Liste. Diese Liste ist vollständig, was später beim Identifizieren nochmals aufgegriffen wird. Die Liste wird wiederum in einer Datenbank gespeichert, wobei mehr als eine Datenbank vorliegt. Die Liste wird also nach Zufall oder nach einem beliebigen Ordnungssystem in einer die mehrfach vorhandenen Datenbanken gespeichert. Die Liste wird beim Speichern in der Datenbank mit Meta-Informationen über die die Herstellungs- und / oder Veredelungsparameter des Produktes angereichert. Solche Meta-Informationen können einfach das Herstellungs-Datum und / oder die Herstellungs-Uhrzeit sein. Es kann eine Chargennummer sein, es können auch Herstellungsparameter wie Analysedaten eines Nahrungsmittels, eines Getränks oder eines Medikaments sein oder Testlaufdaten eines mechanischen Objekts. Ebenso können es Temperaturverläufe einer Lieferkette oder chemische Analysedaten sein. Die Art der Daten ist hier sehr vielfältig. Am Schluss wird auf das Objekt, bevorzugt in maschinenlesbarer Form, eine Informationseinheit aufgebracht. Die Informationseinheit kann gedruckt werden oder in anderer beliebiger Weise auf das Objekt aufgebracht werden, wobei die Informationseinheit eindeutig einer Datenbank zuordenbar ist.

Es hat sich als sehr vorteilhaft herausgestellt, wenn vorgesehen ist, ein Streichen oder Drucken einer Tinte, eines Toners oder eines Lacks zum Aufbringen der zufälligen Verteilung der Pigment-Domänen wobei die Tinte , der Toner oder der Lack fluoreszierende oder phosphoreszierende Pigmente aufweist, und wobei die Konzentration der fluoreszierenden oder phosphoreszierenden Pigmente in der Tinte, in dem Toner oder in dem Lack so bemessen sind, dass bei Markierung einer Fläche von 1 cm² zwischen 4 und 50, bevorzugt zwischen 4 und 20 Pigment-Domänen aufgebracht werden. Dabei ist es abhängig vom Druck- oder Streichverfahren, wie die Konzentration zu bemessen ist. Werden durch das Druck- oder Streichverfahren mehr Lack, Tinte oder Toner verwendet, so kann die Konzentration an Pigmenten entsprechend geringer sein und umgekehrt.

Die Markierung mit einer Informationseinheit kann entweder das ästhetische Aussehen des Objektes stören oder aber die Funktion selbst beeinflussen. Hierfür kann die Verwendung einer Tinte, eines Toners oder eines Lacks zum Aufbringen der Informationseinheit vorgesehen sein, wobei die Tinte, der Toner oder der Lack durch seine Farbe und / oder seine Transparenz im aufgebrachten Zustand für das menschliche Auge unter für die menschliche Sicht üblichen Lichtverhältnissen unsichtbar, zumindest aber bei flüchtigem Blick nicht wahrnehmbar ist. Damit überschneidet sich die Markierung nicht mit weiteren Markierungen, wie zum Beispiel sog. EAN-Codes, einmalig vergebene Codes zur Markierung von Konsumprodukten, welche die Inventarisierung im Handel und die Identifikation des Objektes an der Kasse vereinfachen.

In einer besonderen Ausgestaltung des Verfahrens kann vorgesehen sein, dass die Tinte, der Toner oder der Lack bei Anregung durch Bestrahlung mit Licht im visuellen Bereich von 380 nm bis 780 nm, bevorzugt im Bereich des Lichts mit einer Wellenlänge zwischen 380 nm bis 500 nm, besonders bevorzugt im Bereich zwischen 400 nm bis 470 nm fluoresziert oder phosphoresziert. Das Fluoreszieren oder das Phosphoreszieren werden also mit Licht im visuellen Bereich ausgelöst. Dazu eignen sich solche Pigmente, die bei Bestrahlung mit violettem Licht oder mit blauem Licht fluoreszieren oder phosphoreszieren. Die Verwendung solcher Pigmente hat den Vorteil, dass eine Beleuchtung zum Sichtbarmachen der Pigment-Domänen oder der Informationseinheit mit visuellem Licht geschehen kann, so dass beim Hantieren mit der Lichtquelle ausgeschlossen ist, dass sich ein Nutzer die Augen verblitzt oder schädigt. Gerade bei sehr hohem Produktdurchsatz wird die UV-Dosis für den Nutzer verringert.

Je nach Anforderung des Handels oder der Produktionskette kann es vorteilhaft sein, wenn zumindest Teile der Informationseinheit gelöscht werden können oder auch ganz gelöscht werden können. Hierzu kann vorgesehen sein das Verwenden einer Tinte, eines Toners oder eines Lacks welche / welcher durch Bestrahlen mit Licht im UV-C-Bereich bis UV-B-Bereich, bevorzugt mit Licht mit einer Wellenlänge im Bereich von 240 nm bis 380 nm, besonders bevorzugt durch Bestrahlen mit Licht mit einer Wellenlänge im Bereich von 240 nm bis 315 nm ausbleicht. Das Ausbleichen ermöglicht ein Umetikettieren oder auch das Verbinden des Objektes mit einer neuen Datenbank, die nach Produktveredelung einschlägig ist. Alternativ oder kumulativ kann die Verwendung einer Tinte, eines Toners oder eines Lacks vorgesehen sein, die thermisch gebleicht werden können. Dies kann dazu verwendet werden, nachzuweisen, dass beispielsweise ein Getränk in der geschlossenen Dose ordnungsgemäß pasteurisiert worden ist. Zum Bleichen eignen sich solche fluoreszierenden oder phosphoreszierenden Pigmente, die bei Temperaturen zwischen 80°C und 120°C thermisch gebleicht werden können, so dass eine Erwärmung auf diese Temperatur die Tinte, den Toner oder den Lack bleicht.

Bis hier wurden die individuellen Markierungsschritte und die vorteilhaften Ausgestaltungen des Verfahrens beim Markieren erläutert. Nach dem Markieren folgt an späterer Stelle das Identifizieren. Das zuvor markierte Objekt wird nun wie folgt identifiziert, nämlich durch Bestrahlen der Pigment-Domänen mit Licht im visuellen VIS-Bereich im Bereich einer Wellenlänge des Lichts von 380 nm bis 780 nm, bevorzugt mit Licht im Bereich des Lichts mit einer Wellenlänge zwischen von 380 nm bis 500 nm, besonders bevorzugt mit Licht im Bereich des Lichts mit einer Wellenlänge im Bereich zwischen 400 nm bis 470 nm. Das Objekt wird also mit visuellem Licht, bevorzugt mit blauem Licht, bestrahlt. Dabei werden die Pigment-Domänen sichtbar, wenn sie fluoreszieren und / oder phosphoreszieren. Danach folgt ein Aufnehmen eines Bildes der Pigment-Domänen. Das kann mit einer Digitalkamera geschehen. In dem Bild werden durch ein Algorithmus zur automatischen Bildanalyse folgende Schritte vorgenommen: zunächst ein Identifizieren von zweidimensionalen Koordinaten von im Bild aufgenommenen Pigment-Domänen und das Bestimmen von zweidimensionalen Abständen zwischen Paaren von Pigment-Domänen und / oder Bestimmen von Winkeln, die durch Pigment-Domänen-Tripel aufgespannt werden, der im Schritt zuvor identifizierten Pigment-Domänen. Des Weiteren ein Auslesen der Informationseinheit aus der Oberfläche des Objektes, wobei die Informationseinheit, aus der eine Kennung eindeutig ableitbar ist, eindeutig einer Datenbank zuordenbar ist, und Bestimmen der sich daraus ergebenden Datenbank. Diese identifizierte Datenbank wird sodann abgefragt nach einer Liste, welche die in dem Markierungsschritt zuvor gespeicherte und zusammenhängende Liste die zuvor bestimmten Abstände und / oder Winkel aufweist, wobei die Datenbank den korrespondierenden Datensatz ausgibt. Aus dem Datensatz folgt das Auslesen der Meta-Informationen.

Beim Identifizieren kann es möglich sein, alle bestimmten Abstände und / oder Winkel der Pigment-Domänen in der Datenbank abzufragen. Es kann aber auch ein Untersatz an Abständen und / oder Winkeln abgefragt werden. Das zuvor beschriebene Verfahren zur Identifikation wird also um folgende Schritte ergänzt: Bestimmen einer Anzahl von n Pigment-Domänen aus einer Anzahl m identifizierter Pigment-Domänen, wobei n kleiner ist als m und wobei die n Pigment-Domänen die hellsten Pigment-Domänen beim Bestrahlen sind, und ein Abfragen der Datenbank mit n Abständen aus (m² - m) / 2 möglichen Abständen und / oder ein Anfragen von k Winkeln aus m!/(3! * (m - 3)!) möglichen Winkeln, wobei n und k bevorzugt größer sind als 4. Überraschenderweise hat sich herausgestellt dass schon ab vier Abständen die Variation der Zufallsmuster durch die Anzahl an Abständen und Winkeln so extrem groß wird, dass mit der Abfrage, welche zuvor gespeicherte vollständige Liste in der Datenbank die nahezu willkürlich bestimmten n Abstände und / oder k Winkel aufweist. Die Variation ergibt sich zum einen durch die Wahl von mehr als einer Datenbank und durch die zufälligen Abstandsmuster und / oder Winkelmuster der n hellsten Pigment-Domänen. Ist die Anzahl der Datenbanken hinreichend groß, so dass hinreichend wenige, individuelle Objekte in jeder individuellen Datenbank gespeichert sind, so wird die Identifikation des Objektes auch hinreichend individuell.

Das gesamte Markierungs- und Identifikationsverfahren erlaubt den Einsatz eines handelsüblichen Mobiltelefons mit Kamera und Lampe oder eines Tablett-Computers mit Kamera und Lampe zur Durchführung des Identifikationsverfahrens. Die Lampe der einzusetzenden Kamera oder des einzusetzenden Tablett-Computers strahlt Weißlicht und / oder Licht im visuellen VIS-Bereich von 380 nm bis 780 nm, bevorzugt Licht mit einer Wellenlänge zwischen von 380 nm bis 500 nm, besonders bevorzugt Licht mit einer Wellenlänge im Bereich zwischen 400 nm bis 470 nm aus. Die Lampe von heutigen Kameras und Tablett-Computern hat häufig einen hohen Blauanteil. Damit führt man folgende Schritte durch: Beleuchten der Pigment-Domänen mit dem Licht der Lampe und ein Aufnehmen der Pigment-Domänen mit der Kamera, und schließlich das Ausführen der weiteren in Anspruch 6 benannten Verfahrensschritte mit dem Mobiltelefon oder dem Tablett-Computer. Der Einsatz des Mobiltelefons oder des Tablett-Computers eignet sich zum Einsatz bei der Identifikation eines Objektes beispielsweise durch einen Endkunden. In Fabrikationsprozessen mit hohem Durchsatz würden dafür geeignete Industriekameras eingesetzt.

Da nicht alle Objekte ebene Oberflächen haben, kann es notwendig sein, das Zufallsmuster aus Pigment-Domänen auf eine gekrümmte Oberfläche aufzubringen. Das ist beispielsweise der Fall bei Dosen, Flaschen oder aber Halbfertigprodukten ohne ebene Fläche. Um diese Objekte eindeutig zu identifizieren, kann vorgesehen sein, dass eine Kompensationsoptik eingesetzt wird, welche die Krümmung der Oberfläche ausgleicht. Dazu ist die Kompensationsoptik an die Krümmung des Objektes angepasst. Je nach Leistungsfähigkeit der Kameraoptik kann die Kompensationsoptik entweder nur die Krümmung ausgleichen und ein ebenes Abbild der gekrümmten Oberfläche erzeugen oder aber eine Makrolinseneinstellung der Kameraoptik so anpassen, dass die sehr geringe Schärfentiefe der Kameraoptik an die gekrümmte Oberfläche angepasst wird.

Alternativ oder kumulativ zur Kompensationsoptik kann auch eine Makrolinse als Vorsatzlinse eingesetzt werden, um die in der Regel recht kleinflächigen Markierungen, die im Bereich von 1 cm² bis 2 cm² liegen, gut und nah abbilden zu können.

In einer besonderen Ausführungsform des erfindungsgemäßen Verfahrens kann die Informationseinheit darin bestehen, dass bestimmte Fluoreszenz- und / oder Phosphoreszenz-Farben in den Pigment-Domänen vorhanden sind. Soll die Markierung mit einem handelsüblichen Mobiltelefon oder einem Tablett-Computer ausgelesen werden, so sind mindestens drei Farbkanäle verfügbar, welche die Kamera eindeutig unterscheiden kann. Werden nun Markierungen verwendet, die sich einer aus drei Farben, zwei aus drei Farben oder aller drei Farben bedient, so ist es möglich, daraus 7 Farbkombinationen zu bilden, um eine Datenbank-Zuordnung vorzunehmen. Hochwertige Kameras von Mobiltelefonen können auch mehrere Farben noch gut unterscheiden, so dass sich bei der Verwendung von n Farben insgesamt 2ⁿ Farbkombinationen bilden lassen, die als Datenbank-Zuordnungsparameter nutzbar sind.

Die Erfindung wird anhand der folgenden Figuren näher erläutert. Es zeigt:
- Fig. 1: eine handelsübliche Getränkedose mit aufgebrachtem QR-Code als Beispiel für ein Objekt ohne ebene Oberfläche,
- Fig. 2: die Getränkedose aus Figur 1 mit Blick auf den konkaven Boden mit inverser Halbkalotte in perspektivischer Ansicht,
- Fig. 3: ein Blick auf die inverse Halbkalotte aus Figur 2 in einer Ansicht von oben mit Skizze zur Verdeutlichung des Zusammenhangs zwischen Markierung und Datenbank,
- Fig. 4: ein Beispiel eines zufälligen Bestrichs mit einer pigmenthaltigen Tinte als vergrößertes Detail A,
- Fig. 5: der zufällige Bestrich aus Figur 4 mit eingezeichneten Abständen ausgewählter Pigment-Domänen,
- Fig. 6: Verbindung eines handelsüblichen Mobiltelefons mit einer Getränkedose aus den Figuren 1 und 2 über eine Kompensationsoptik,
- Fig. 7: eine vereinzelte Kompensationsoptik aus Fig. 6,
- Fig. 8: ein Diagramm zur Verdeutlichung der Einordnung von Lichtspektren mit verschiedenen Wellenlängenbereichen.

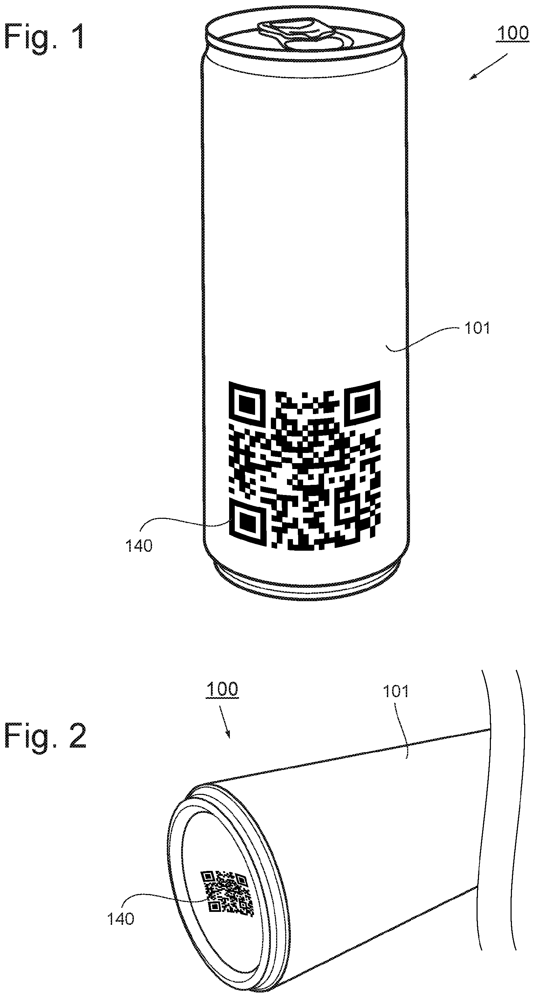

In **Figur 1** ist eine handelsübliche Getränkedose als Objekt 100 mit aufgebrachtem QR-Code als Beispiel für ein Objekt ohne ebene Oberfläche dargestellt. In dem QR-Code als Informationseinheit 140, der durch Wahl einer fluoreszierenden Tinte, einem fluoreszierendem Lack oder eines fluoreszierenden Toners auch für das menschliche Auge unsichtbar, zumindest kaum wahrnehmbar gestaltet sein kann, können Informationen enthalten sein, welche eine Datenbank identifiziert, in welcher Daten über diese individuelle Dose enthalten sind. Unterschiedliche Datenbanken können sein, unterschiedliche Datenbank-Server an unterschiedlichen Orten der Welt, unterschiedliche Datenbank-Programme auf dem gleichen Server, aber auch Datensätze innerhalb einer Datenbank, die durch einen gemeinsamen Datensatz, wie einer Erkennungs-ID einen zusammenhängenden Datensatz als virtuelle Datenbank bilden.

In Figur 1 ist dargestellt, dass die Oberfläche 101 der Dose als Objekt 100 keine ebene Fläche aufweist.

In **Figur 2** ist die Getränkedose aus Figur 1 mit Blick auf den konkaven Boden mit inverser Halbkalotte in perspektivischer Ansicht gezeigt. Die inverse Halbkalotte wird wie auch bei Flaschen in die Dose eingebracht, um dem Druck innerhalb der Dose besser widerstehen zu können. Anstelle auf den Dosenmantel kann ein QR-Code auch auf den gekrümmten Dosenboden aufgedruckt sein.

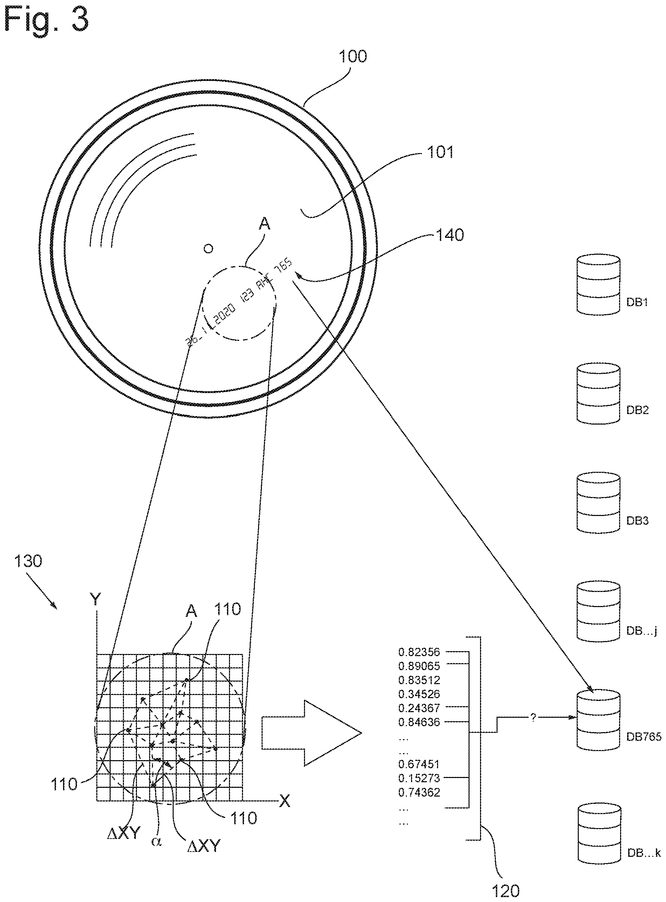

In **Figur 3** ist ein Blick auf die inverse Halbkalotte aus Figur 2 in einer Ansicht von oben mit Skizze zur Verdeutlichung des Zusammenhangs zwischen Markierung und Datenbank gezeigt. Die Dose als Objekt 100, weist bodenseitig eine konkave Oberfläche 101 auf. Auf diese Oberfläche ist im Bereich des Details A ein Aufdruck oder ein Aufstrich mit einem Toner, einem Lack oder einer Tinte aufgebracht, welche fluoreszierende oder phosphoreszierende Pigmente enthält. Quer über die Fläche im Detail A ist eine Informationseinheit aufgedruckt. In diesem Beispiel ist die Informationseinheit nicht als QR-Code, sondern als 7-Segment-Darstellung gezeigt, die ebenso maschinell auslesbar ist. In der Informationseinheit ist beispielsweise eine Zahl "765" enthalten, die als Kennung für eine Datenbank oder mehrere Datenbanken dient. Das Detail A enthält fluoreszierende oder phosphoreszierende Pigmente. Beim Aufnehmen eines Bildes 130 des Details A mit den dort vorhandenen Pigment-Domänen 110 werden die Koordinaten X und Y einer jeden Pigment-Domäne bestimmt und auch die Abstände ΔXY zwischen je zwei Pigment-Domänen als Pigment-Domänenpaar. Die bestimmten Abstände werden in einer Liste 120 zusammengefasst und in einer Datenbank, hier beispielsweise Datenbank DB765 gespeichert. Der Inhalt der Informationseinheit 140 ist der Datenbank DB765 unmittelbar zuordenbar.

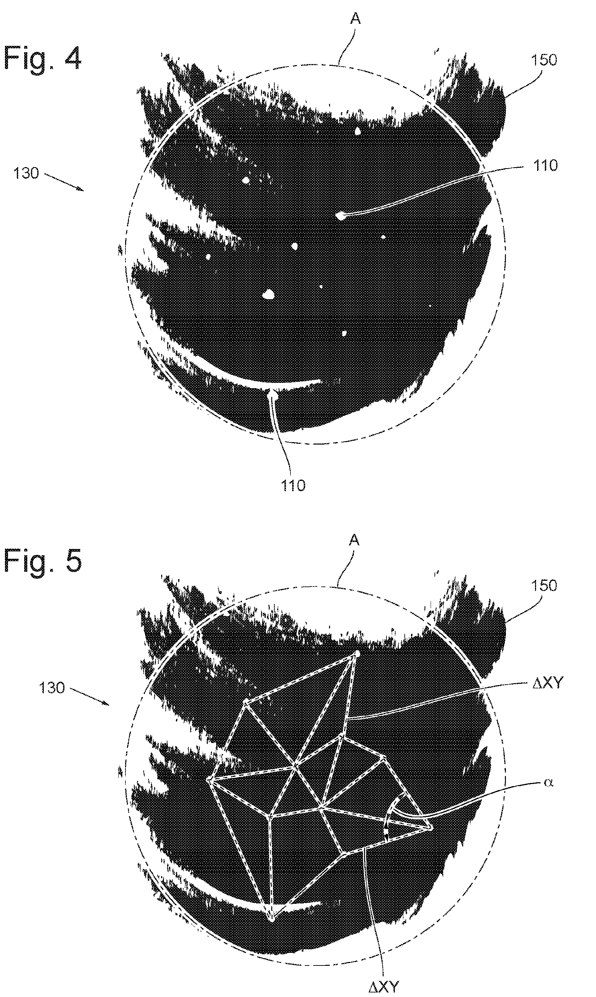

In **Figur 4** ist ein Beispiel eines zufälligen Bestrichs mit einer pigmenthaltigen Tinte als vergrößertes Detail A aus Figur 3 gezeigt, wobei das Detail A als Bild 130 aufgenommen ist. Der Bestrich kann zufällig sein, wie ein Pinselstrich aber auch geradlinig und wiederholbar abgegrenzt sein. Das hängt von der Wahl des Markierungsverfahrens ab. Innerhalb des Bestrichs mit der Tinte 150 befinden sich Pigment-Domänen 110, die in Größe und Position zufällig verteilt sind.

In **Figur 5** ist der zufällige Bestrich aus Figur 4 mit eingezeichneten Abständen ΔXY ausgewählter Pigment-Domänen gezeigt. Dabei sind hier nur solche Abstände eingezeichnet, deren Verbindungslinie mit keiner weiteren Verbindungslinie eine Überkreuzung darstellt. Dadurch sind weniger Verbindungslinien abgebildet als es nach (m² - m) / 2 mögliche Abstände ΔXY gibt, wobei m die Anzahl der Pigment-Domänen ist. Zur Identifikation dieser Dose ist es möglich, in der hier beispielsweise gewählten Datenbank DB765 zu fragen, welche vollständige Liste mit allen (m² - m) / 2 die hier eingezeichneten Abstände enthält.

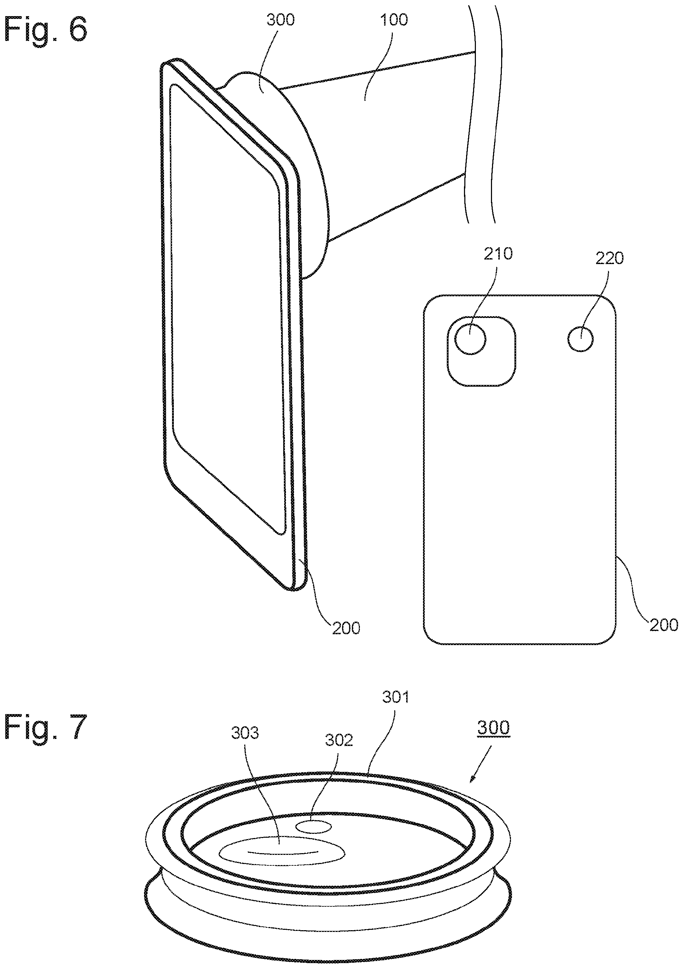

In **Figur 6** ist eine Verbindung eines handelsüblichen Mobiltelefons 200 mit einer Getränkedose als Objekt 100 aus den Figuren 1 und 2 über eine Kompensationsoptik 300 skizziert. Die Linse der Kamera 210 des handelsüblichen Mobiltelefons 200 wird über die Kompensationsoptik 300, die eine Kompensationslinse 303 enthält, dazu befähigt, aus der extremen Nähe sowohl die Pigment-Domänen 110, hier nicht gezeigt, als auch die Informationseinheit 140, auch nicht gezeigt, vom gekrümmten Boden der Dose als Objekt 100 zu lesen.

In **Figur 7** ist eine Kompensationsoptik 300 gezeigt, die hier für die Nutzung mit einem handelsübliche Mobiltelefon 200 ausgelegt ist. Ein Montagering 301, der aus Gummi oder aus Kunststoff gefertigt sein kann, weist im Inneren eine Lampenausnehmung 102 auf, damit die Lampe des handelsüblichen Mobiltelefons 200 den Boden der Dose als Objekt 100 beleuchten kann. Des Weiteren weist die Kompensationsoptik 300 eine Kompensationslinse 303 auf, die im montierten Zustand unmittelbar über der Kameralinse der Kamera 210 angeordnet ist und wie eine Brille oder eine zusätzliche Linse die Kameralinse dazu befähigt, auf den extrem nahe angeordneten und gekrümmten Boden der Dose als Objekt 100 zu blicken und scharf abzubilden.

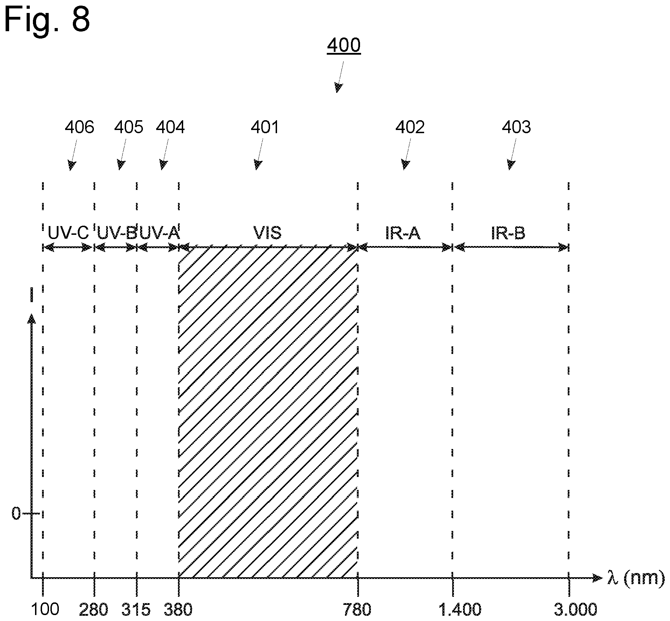

In **Figur 8** ist schließlich ein Diagramm 400 zur Verdeutlichung der Einordnung von Lichtspektren mit verschiedenen Wellenlängenbereichen gezeigt. Licht weist im Zentrum seines gesamten Wellenlängenbereiches einen visuellen VIS-Bereich 401 auf, nämlich beginnend bei einer Wellenlänge von 380 nm bis zu einer Wellenlänge von 780 nm. Innerhalb dieses visuellen VIS-Bereichs soll die Anregung der fluoreszierenden und / oder phosphoreszierenden Pigment-Partikel geschehen. An den visuellen VIS-Bereich 401 schließt sich zu längeren Wellenlängen ein naher IR-A-Infrarotbereich 402 an, der von 780 nm Wellenlänge bis zu 1.400 nm Wellenlänge reicht, gefolgt einem fernen IR-B-Infrarotbereich von 1.400 nm Wellenlänge bis hin zu 3.000 nm Wellenlänge. Im kurzwelligen Bereich ist der VIS-Bereich 401 benachbart vom UV-A-Bereich 402, der von 315 nm bis 380 nm reicht. Der UV-A-Bereich 404 wird zu kürzeren Wellenlängen hin gefolgt von einem UV-B-Bereich 405 mit einem Wellenlängenintervall von 280 nm bis 315 nm. Der UV-C-Bereich 406 schließt sich daran an mit einem Wellenlängenbereich von 100 nm Wellenlänge bis 280 nm Wellenlänge. In diesem Bereich kann eine Lichtquelle Licht aussenden, um die Informationseinheit 140 optional zu bleichen.

**BEZUGSZEICHENLISTE**

| | | | |
|---|---|---|---|
| 100 | Objekt | 403 | IR-B |
| 101 | Oberfläche | 404 | UV-A |
| 110 | Pigment-Domäne | 405 | UV-B |
| 120 | Liste | 406 | UV-C |
| 130 | Bild | | |
| 140 | Informationseinheit | α | Winkel |
| 150 | Tinte | A | Detail |
| 200 | Mobiltelefon | DB1 | 1. Datenbank |
| 210 | Kamera | DB2 | 2. Datenbank |
| 220 | Lampe | DB3 | 3. Datenbank |
| 300 | Kompensationsoptik | DBj | j. Datenbank |
| 301 | Montagering | DB765 | 765. Datenbank |
| 302 | Lampenausnehmung | DBk | k. Datenbank |
| 303 | Kompensationslinse | ΔXY | Abstand |
| 400 | Spektrum | X | Koordinate |
| 401 | VIS | Y | Koordinate |
| 402 | IR-A | | |

## Patentansprüche

1. Verfahren zum eindeutigen Markieren eines Objektes (100),
wobei eine zufällige Verteilung von einzelnen Pigment-Domänen (110) auf eine Oberfläche (101) des Objektes (100) aufgebracht wird, und
wobei eine Liste (120) von Abständen (ΔXY) der einzelnen Pigment-Domänen (110) untereinander gemessen und in einer Datenbank (DB1, DB2, DB3, DBj, DB765, DBk) gespeichert wird,
mit folgenden Schritten
- **Aufnehmen** eines Bildes (130) der Pigment-Domänen (110),
- **Identifizieren** der zweidimensionalen Koordinaten (X, Y) einer jeden im Bild (130) aufgenommen Pigment-Domäne (110),
- **Bestimmen** des zweidimensionalen Abstandes (ΔXY) eines jeden Paares aus zwei Pigment-Domänen (110), und / oder
- **Bestimmen** des Winkels (α) eines jeden Tripels von Pigment-Domänen,
- **Speichern** der in einem der Schritte zuvor bestimmten Abstände (ΔXY) und/oder Winkel (α) in einer Liste (120),
- **Speichern** der Liste (120) in der Datenbank (DB765), **gekennzeichnet, dadurch dass** die Liste (120) mit Meta-Informationen über die Herstellungs- und / oder Veredelungsparameter des Objektes (100) angereichert ist, sowie durch
- **Aufbringen** einer Datenbank-Identifikation als Informationseinheit (140) auf die Oberfläche (101) des Objektes (100), wobei die Informationseinheit (140) eindeutig der Datenbank (DB765) zuordenbar ist.

2. Verfahren nach Anspruch 1,
**gekennzeichnet durch**
Streichen oder Drucken einer Tinte (150), eines Toners oder eines Lacks zum Aufbringen der zufälligen Verteilung der Pigment-Domänen (110), wobei die Tinte (150), der Toner oder der Lack fluoreszierende oder phosphoreszierende Pigmente aufweisen,
wobei die Konzentration der fluoreszierenden oder phosphoreszierenden Pigmente in der Tinte (150), in dem Toner oder in dem Lack so bemessen ist, dass bei Markierung einer Fläche von 1 cm² zwischen 4 und maximal 50, bevorzugt zwischen 4 und maximal 20 Pigment-Domänen (110) aufgebracht werden.

3. Verfahren nach Anspruch 1 oder 2,
**gekennzeichnet durch**
Verwenden einer Tinte (150), eines Toners oder eines Lacks zum Aufbringen der Informationseinheit (140), wobei die Tinte (150), der Toner oder der Lack **durch** seine Farbe und / oder seine Transparenz im aufgebrachten Zustand für das menschliche Auge unter für die menschliche Sicht üblichen Lichtverhältnissen unsichtbar, zumindest aber bei flüchtigem Blick nicht wahrnehmbar ist.

4. Verfahren nach Anspruch 3,
**dadurch gekennzeichnet, dass**
die Tinte (150), der Toner oder der Lack bei Anregung durch Bestrahlung mit Licht im visuellen Bereich von 380 nm bis 780 nm, bevorzugt im Bereich des Lichts mit einer Wellenlänge zwischen von 380 nm bis 500 nm, besonders bevorzugt im Bereich zwischen 400 nm bis 470 nm fluoresziert oder phosphoresziert.

5. Verfahren nach einem der Ansprüche 3 oder 4,
**gekennzeichnet durch**
- **Verwenden** einer Tinte (150), eines Toners oder eines Lacks welche / welcher **durch** Bestrahlen mit Licht im UV-C-Bereich (406) bis UV-B-Bereich (405), bevorzugt mit Licht mit einer Wellenlänge im Bereich von 240 nm bis 380 nm, besonders bevorzugt **durch** Bestrahlen mit Licht mit einer Wellenlänge im Bereich von 240 nm bis 315 nm ausbleicht.

6. Verfahren nach einem der Ansprüche 1 bis 5,
**dadurch gekennzeichnet, dass**
die Informationseinheit (140) durch die Kombination der in den Pigment-Domänen (110) vorhandenen Fluoreszenz- und / oder Phosphoreszenz-Farben gegeben ist.

7. Verfahren zum Identifizieren eines Objekts, welches nach den Verfahren nach einem der Ansprüche 1 bis 6 markiert worden ist,
**gekennzeichnet durch**
- **Bestrahlen** der Pigment-Domänen (110) mit Licht im visuellen VIS-Bereich (401) von 380 nm bis 780 nm, bevorzugt mit Licht im Bereich des Lichts mit einer Wellenlänge zwischen von 380 nm bis 500 nm, besonders bevorzugt mit Licht im Bereich des Lichts mit einer Wellenlänge im Bereich zwischen 400 nm bis 470 nm,
- **Aufnehmen** eines Bildes (130) der Pigment-Domänen (110),
- **Identifizieren** von zweidimensionalen Koordinaten (X, Y) von im Bild (130) aufgenommen Pigment-Domänen (110),
- **Bestimmen** von zweidimensionalen Abständen (ΔXY) zwischen Paaren von Pigment-Domänen (110) der im Schritt zuvor identifizierten Pigment-Domänen (110), und / oder
- **Bestimmen** von Winkeln (α), die **durch** drei Pigment-Domänen aufgespannt werden,
- **Auslesen** der Informationseinheit (140) aus der Oberfläche (101) des Objektes (100), wobei die Informationseinheit (140) eindeutig einer Datenbank (DB765) zuordenbar ist, und Bestimmen der sich daraus ergebenden Datenbank (DB765),
- **Abfragen** der im Schritt zuvor identifizierten Datenbank (DB765), welche in der Datenbank (DB765) zuvor gespeicherte und zusammenhängende Liste (120) die zuvor bestimmten Abstände (ΔXY) aufweist, wobei die Datenbank (DB765) den korrespondierenden Datensatz ausgibt
- **Auslesen** der Meta-Informationen aus dem Datensatz.

8. Verfahren nach Anspruch 7,
**gekennzeichnet durch**
anschließendes Bestrahlen der Informationseinheit (140) mit Licht mit einer Wellenlänge im UV-C-Bereich (406) bis UV-B-Bereich (405) , bevorzugt Bereich der Wellenlänge des Lichts von 240 nm bis 380 nm, besonders bevorzugt im Bereich der Wellenlänge des Lichts mit einer Wellenlänge von 240 nm bis 315 nm, so dass die Informationseinheit (140) ausbleicht und / oder erwärmen der Informationseinheit (140) auf eine Temperatur zwischen 80°C und 120 °C, so dass die Informationseinheit (140) ausbleicht.

9. Verfahren nach Anspruch 7,
**gekennzeichnet durch**
- **Bestimmen** einer Anzahl von n Pigment-Domänen (110) aus einer Anzahl m identifizierter Pigment-Domänen (110), wobei n kleiner ist als m und wobei die n Pigment-Domänen (110) die hellsten Pigment-Domänen (110) beim Bestrahlen sind,
- **Abfragen** der Datenbank (DB765) mit n Abständen (ΔXY) aus (m² - m) / 2 möglichen Abständen (ΔXY), wobei n bevorzugt größer ist als 4, und / oder
- **Abfragen** der Datenbank (DB765) mit k Winkeln (α) aus m! (3! * (m-3)!) möglichen Winkeln (α).

10. Verfahren nach Anspruch 7,
**gekennzeichnet durch**
- **Verwenden** eines Mobiltelefons (200) oder eines Tablett-Computers, das ausgestattet ist mit Kamera (210) und Lampe (220), wobei
die Lampe (220) Licht im visuellen VIS-Bereich (401) von 380 nm bis 780 nm, bevorzugt Licht mit einer Wellenlänge zwischen von 380 nm bis 500 nm, besonders bevorzugt Licht mit einer Wellenlänge im Bereich zwischen 400 nm bis 470 nm ausstrahlt,
- **Beleuchten** der Pigment-Domänen (110) mit dem Licht der Lampe (220),
- **Aufnehmen** der Pigment-Domänen (110) mit der Kamera (210), und
- **Ausführen** der weiteren in Anspruch 7 benannten Verfahrensschritte mit dem Mobiltelefon (200) oder dem Tablett-Computer.

11. Verfahren nach einem der Ansprüche 6 bis 10,
**gekennzeichnet durch**
- **Verwenden** einer Kompensationsoptik (300) zum Aufnehmen des Bildes (130), wobei die Kompensationsoptik (300) eine von der Ebene abweichende Oberfläche (101) des Objektes (100) kompensiert, und / oder
- **Verwenden** einer Makrolinse als Aufsatzlinse zum Aufnehmen des Bildes (130).

12. Verfahren nach einem der Ansprüche 6 bis 11,
**gekennzeichnet durch**
- **Berechnen** der von einer Ebene abweichenden Oberfläche (101) des Objektes (100),
wobei für den Ort der zufälligen Verteilung der einzelnen Pigment-Domänen (110) auf der Oberfläche (101) des Objektes (100) ein vorbestimmter Ort mit einer vorbestimmten Form angenommen wird.

## Claims

1. A method for clearly marking an object (100),
wherein a random distribution of individual pigment domains (110) is applied to a surface (101) of the object (100), and
wherein a list (120) of distances (ΔXY) of the individual pigment domains (110) from each other is measured and stored in a database (DB1, DB2, DB3, DBj, DB765, DBk), with the following steps:
- **Recording** an image (130) of the pigment domains (110),
- **Identifying** the two-dimensional coordinates (X, Y) of each of the pigment domains (110) recorded in the image (130),
- **Determining** the two-dimensional distances (ΔXY) of each pair of two pigment domains (110), and/or
- **Determining** the angle (α) of each triple of pigment domains,
- **Storing** the distances (ΔXY) and/or angles (α) determined beforehand in one of the steps in a list (120),
- **Storing** the list (120) in the database (DB765),
***characterized in that*** the list (120) is enriched with meta information about the manufacturing and/or refining parameters of the object (100),
***as well as by***
- Applying a database identification as the information unit (140) onto the surfaces (101) of the object (100), wherein the information unit (140) can clearly be allocated to the database (DB765).

2. The method according to claim 1,
***characterized by***
painting or printing an ink (150), a toner or a varnish for applying the random distribution of pigment domains (110),
wherein the ink (150), the toner or the varnish has fluorescent or phosphorescent pigments,
wherein the concentration of fluorescent or phosphorescent pigments in the ink (150) in the toner or in the varnish is metered in such a way as to apply between 4 and at most 50, preferably between 4 and at most 20 pigment domains (110) while marking a surface of 1 cm².

3. The method according to claim 1 or 2,
***characterized by***
using an ink (150), a toner or a varnish for applying the information unit (140), wherein the ink (150), the toner or the varnish is invisible to the human eye in the applied state, or at least not perceptible at first glance, under the usual lighting conditions for human sight by virtue of its color and/or its transparency.

4. The method according to claim 3,
***characterized in that***
the ink (150), the toner or the varnish fluoresces or phosphoresces when excited by irradiation from light in the visual range of 380 nm to 780 nm, preferably within a range of light having a wavelength of between 380 nm and 500 nm, especially preferably within a range of between 400 nm and 470 nm.

5. The method according to one of claims 3 or 4,
***characterized by***
- **using** an ink (150), a toner or a varnish which fades when irradiated with light in the UV-C range (406) to UV-B range (405), preferably with light having a wavelength ranging from 240 nm to 380 nm, especially preferably when irradiated with light having a wavelength within a range of 240 nm to 315 nm.

6. The method according to one of claims 1 to 5,
***characterized in that***
the information unit (140) is given by the combination of fluorescent and/or phosphorescent colors present in the pigment domains (110).

7. A method for identifying an object, which has been marked based on the method according to one of claims 1 to 6,
***characterized by***
- **Irradiating** the pigment domains (110) with light in the visual VIS range (401) of 380 nm to 780 nm, preferably with light within the range of light having a wavelength of between 380 nm and 500 nm, especially preferably with light within a range of light having a wavelength ranging from 400 nm to 470 nm,
- **Recording** an image (130) of the pigment domains (110),
- **Identifying** two-dimensional coordinates (X, Y) of pigment domains (110) recorded in the image (130),
- **Determining** two-dimensional distances (ΔXY) between pairs of pigment domains (110) of the pigment domains (110) identified in the preceding step, and/or
- **Determining** angles (α) spanned by three pigment domains,
- **Reading out** the information unit (140) from the surface (101) of the object (100), wherein the information unit (140) can be clearly allocated to a database (DB765), and determining the resultantly arising database (DB765),
- **Querying** the previously identified database (DB765), which has the previously determined distances (ΔXY) in the coherent list (120) previously stored in the database (DB765), wherein the database (DB765) outputs the corresponding dataset,
- **Reading out** the meta information from the dataset.

8. The method according to claim 7,
***characterized by***
subsequently irradiating the information unit (140) with light having a wavelength in the UV-C range (406) to UV-B range (405), preferably within a light wavelength range of 240 nm to 380 nm, especially preferably within a wavelength range of the light having a wavelength of 240 nm to 315 nm, so that the information unit (140) fades and/or the information unit (140) is heated to a temperature of between 80 °C and 120 °C, so that the information unit (140) fades.

9. The method according to claim 7,
***characterized by***
- **Determining** a number of n pigment domains (110) form a number m of identified pigment domains (110), wherein n is less than m, and wherein the n pigment domains (110) are the brightest pigment domains (110) during irradiation,
- **Querying** the database (DB765) with n distances (ΔXY) out of (m²-m)/2 possible distances (ΔXY), wherein n is preferably greater than 4, and/or
- **Querying** the database (DB765) with k angles (α) out of m! (3! * (m-3)!) possible angles (α).

10. The method according to claim 7,
***characterized by***
- **Using** a mobile telephone (200) or a tablet computer equipped with a camera (210) and lamp (220), wherein
the lamp (220) emits light in the visual VIS range (401) of 380 nm to 780 nm, preferably light having a wavelength of between 380 nm and 500 nm, especially light having a wavelength within a range of between 400 nm and 470 nm,
- **Illuminating** the pigment domains (110) with the light of the lamp (220),
- **Recording** the pigment domains (110) with the camera (210), and
- **Implementing** the other procedural steps mentioned in claim 7 with the mobile telephone (200) or the tablet computer.

11. The method according to one of claims 6 to 10,
***characterized by***
- **Using** compensation optics (300) for recording the image (130), wherein the compensation optics (300) compensate for a surface (101) of the object (100) deviating from the plane, and/or
- **Using** a microlens as the attachment lens for recording the image (130).

12. The method according to one of claims 6 to 11,
***characterized by***
- **Calculating** the surface (101) of the object (100) deviating from a plane,
wherein a predetermined location with a predetermined shape is assumed for the location of the random distribution of individual pigment domains (110) on the surface (101) of the object (100).

## Revendications

1. Procédé de marquage univoque d'un objet (100), sachant qu'une répartition fortuite des domaines de pigments individuels (110) est appliquée à une surface (101) de l'objet (100), et
sachant qu'une liste (120) d'intervalles (ΔXY) des domaines de pigments individuels (110) entre eux est mesurée et est mémorisée dans une banque de données (DB1, DB2, DB3, DBj, DB765, DBk),
avec les étapes suivantes :
- **enregistrement** d'une image (130) des domaines de pigments (110),
- **identification** de coordonnées bidimensionnelles (X, Y) de chaque domaine de pigments (110) enregistré dans l'image (130),
- **détermination** de l'intervalle bidimensionnel (ΔXY) de chaque paire de deux domaines de pigments (110), et/ou
- **détermination** de l'angle (α) de chaque triplet de domaines de pigments,
- **mémorisation** des intervalles (ΔXY) et/ou des angles (α) préalablement déterminés dans une étape dans une liste (120),
- **mémorisation** de la liste (120) dans la banque de données (DB765),
***caractérisé en ce que*** la liste (120) est enrichie avec des méta-informations sur les paramètres de fabrication et/ou d'ennoblissement de l'objet (100),
***et par***
- **l'application** d'une identification de banque de données en tant qu'unité d'information (140) à la surface (101) de l'objet (100), sachant que l'unité d'information (140) peut être attribuée de façon univoque à la banque de données (DB765).

2. Procédé selon la revendication 1,
***caractérisé par***
l'étalement ou l'impression d'une encre (150), d'un toner ou d'une laque pour l'application de la répartition fortuite des domaines de pigments (110), sachant que l'encre (150), le toner ou la laque comportent des pigments fluorescents ou phosphorescents,
sachant que la concentration des pigments fluorescents ou phosphorescents dans l'encre (150), le toner ou la laque est mesurée de telle manière que lors du marquage d'une surface de 1 cm², entre 4 et au maximum 50, de préférence entre 4 et au maximum 20 domaines de pigments (110) sont appliqués.

3. Procédé selon la revendication 1 ou 2,
***caractérisé par***
l'utilisation d'une encre (150), d'un toner ou d'une laque pour appliquer l'unité d'information (140), sachant que l'encre (150), le toner ou la laque est invisible, mais au moins non perceptible à un coup d'œil furtif, par sa couleur et/ou sa transparence à l'état appliqué pour l'œil humain dans des conditions de lumière usuelles pour la vue humaine.

4. Procédé selon la revendication 3,
***caractérisé en ce que***
l'encre (150), le toner ou la laque devient fluorescent ou phosphorescent lors d'une excitation par exposition à la lumière dans une plage visuelle de 380 nm à 780 nm, de préférence dans une plage de lumière avec une longueur d'onde se situant entre 380 nm et 500 nm, de préférence en particulier dans une plage se situant entre 400 nm et 470 nm.

5. Procédé selon l'une quelconque des revendications 3 ou 4 :
***caractérisé par***
- **l'utilisation** d'une encre (150), d'un toner ou d'une laque, laquelle/lequel se décolore par exposition à la lumière dans une plage UV-C (406) à une plage UV-B (405), de préférence à la lumière d'une longueur d'onde dans une plage de 240 nm à 380 nm, de préférence en particulier par une exposition à la lumière d'une longueur d'onde dans une plage de 240 nm à 315 nm.

6. Procédé selon l'une quelconque des revendications 1 à 5,
***caractérisé en ce que***
l'unité d'information (140) est constituée par la combinaison des couleurs fluorescentes et/ou phosphorescentes présentes dans les domaines de pigments (110).

7. Procédé d'identification d'un objet, lequel a été marqué selon l'une quelconque des revendications 1 à 6 :
***caractérisé par***
- **l'exposition** des domaines de pigments (110) à une lumière d'un domaine de la visibilité (VIS) (401) de 380 nm à 780 nm, de préférence à une lumière dans une plage de lumière avec une longueur d'onde se situant entre 380 nm et 500 nm, de préférence en particulier à une lumière dans une plage de lumière avec une longueur d'onde dans une plage de 400 nm à 470 nm,
- **l'enregistrement** d'une image (130) des domaines de pigments (110),
- **l'identification** de coordonnées bidimensionnelles (X, Y) de domaines de pigments (110) enregistrés dans l'image (130),
- **la détermination** d'intervalles bidimensionnels (ΔXY) entre des paires de domaines de pigments (110) des domaines de pigments (110) préalablement identifiés dans l'étape, et/ou
- **la détermination** des angles **(α),** qui sont délimités par trois domaines de pigments,
- **la lecture** de l'unité d'information (140) à partir de la surface (101) de l'objet (100), sachant que l'unité d'information (140) peut être attribuée de façon univoque à une banque de données (DB765) et détermination de la banque de données (DB765) en résultant,
- **l'interrogation** de la banque de données (DB765) préalablement identifiée dans l'étape, laquelle comporte les intervalles préalablement déterminés (ΔXY) dans la liste (120) préalablement mémorisée et s'y rattachant dans la banque de données (DB765), sachant que la banque de données (DB765) édite l'ensemble de données correspondant,
- **la lecture** des méta-informations à partir de l'ensemble de données,

8. Procédé selon la revendication 7,
***caractérisé par***
l'exposition ultérieure de l'unité d'information (140) avec de la lumière avec une longueur d'onde dans une zone UV-C (406) jusqu'à une zone UV-B (405), de préférence une plage de longueur d'ondes de lumière de 240 nm à 380 nm, de préférence en particulier dans une plage de longueur d'ondes de lumière avec une longueur d'ondes de 240 nm à 315 nm de telle manière que l'unité d'information (140)se décolore et/ou
par réchauffement de l'unité d'information (140) à une température entre 80 °C et 120 °C, de sorte que l'unité d'information (140) se décolore.

9. Procédé selon la revendication 7,
***caractérisé par***
- **la détermination** d'un nombre de domaines de pigments (110) à partir d'un nombre 'm' de domaines de pigments identifiés (110), sachant que 'n' est plus petit que 'm' et sachant que les 'n' domaines de pigments (110) sont les domaines de pigment s (110) les plus clairs lors de l'exposition,
- **l'interrogation** de la banque de données (DB765) à 'n' intervalles m (ΔXY) à partir d'intervalles (ΔXY) (m²-m)/2 possibles, sachant que 'n' est de préférence plus grand que 4, et/ou
- **l'interrogation** de la banque de données (DB765) avec 'k' angles (α) à partir de angles (α) m ! (3 !*(m-3) !) possibles.

10. Procédé selon la revendication 7,
***caractérisé par***
- **l'utilisation** d'un téléphone mobile (200) ou d'une tablette, qui sont équipés d'une caméra (210) et d'une lampe (220), sachant que
- la lampe (220) émet de la lumière dans un domaine de la visibilité (VIS) (401) de 380 nm à 780 nm, de préférence de la lumière avec une longueur d'onde de 380 nm à 500 nm, de préférence en particulier de la lumière avec une longueur d'onde dans une plage se situant entre 400 nm à 470 nm,
- **l'éclairage** des domaines de pigments (110) avec la lumière de la lampe (220),
- **l'enregistrement** des domaines de pigments (110) avec la caméra (210), et
- **l'exécution** des autres étapes de procédé citées dans la revendication 7 avec le téléphone mobile (200) ou la tablette.

11. Procédé selon l'une quelconque des revendications 6 à 10,
***caractérisé par***
- **l'utilisation** d'un système optique de compensation (300) pour enregistrer l'image (130), sachant que le système optique de compensation (300) compense une surface (101) de l'objet (100) dérivant du plan, et/ou
- **l'utilisation** d'une macrolentille en tant que lentille de fixation pour enregistrer l'image (130).

12. Procédé selon l'une quelconque des revendications 6 à 11,
***caractérisé par***
- **le calcul** de la surface (101) de l'objet (100) dérivant d'un plan,
sachant qu'un emplacement prédéterminé avec une forme prédéterminée est adopté pour l'emplacement de la répartition fortuite des domaines de pigments (110) sur la surface (101) de l'objet (100).
